# EUROPEAN PATENT SPECIFICATION

(11) **EP 4 479 227 B1**
(45) Date of publication and mention of the grant of the patent: **30.09.2026**
(21) Application number: 24752964.7
(22) Date of filing: 25.01.2024
(51) Int. Cl.: B27D 1/04, B32B 7/12, B32B 21/04, B32B 21/14, E04F 15/02

(54) **MANUFACTURING METHOD FOR MULTI-LAYER FLOOR PANELS**
HERSTELLUNGSVERFAHREN FÜR MEHRSCHICHTIGE BODENPLATTEN
PROCÉDÉ DE FABRICATION DE PANNEAUX DE PLANCHER MULTICOUCHES

(30) Priority: 09.02.2023 PL 44372923
(43) Date of publication of application: 25.12.2024
(73) Proprietor: "Barlinek" Spólka Akcyjna, 25-323 Kielce (PL)
(72) Inventor: ASAK, Grzegorz, 66-400 Gorzów Wielkopolski (PL); HOFFMANN, Piotr, 72-100 Goleniów (PL)
(74) Representative: BRANDPAT Patent and Trademark Attorneys Chlebicka Czyz Ziolkowski Professional Partnership
(86) International application number: PCT/IB2024/050703
(87) International publication number: WO 2024/165937

(56) References cited:
- EP-A1- 3 575 080
- WO-A1-2012/140682
- WO-A1-2012/140682
- DE-A1- 102014 105 230
- US-A1- 2019 152 207

## Description

The subject of the invention is a manufacturing method for multi-layer floor panels, in which at least one layer is a composite panel made of mineral raw materials, such as chalk, and polymers, particularly including polyvinyl chloride (PVC), polystyrene, polypropylene, or other polyolefins, featuring at least one layer made of wooden veneers obtained through chipless machining.

### Technical field

The low surface energy of panels made of a composite with a high PVC content, the sensitivity of such a thermoplastic composite to temperature changes, as well as its nonhomogeneous surface structure revealed during the grinding process hinder the effective gluing of such composite layers with wooden veneer layers, in particular with layers of wood obtained through chipless machining and drying. Wood layers obtained through chipless machining usually have nonhomogeneous thickness, are not flat, do not exhibit uniform stiffness, and are distinguished by variable hygroscopic and anisotropic properties, which additionally hinders the gluing process. An additional difficulty in manufacturing multi-layer floor panels occurs when layers must be glued in a production line system. In this respect, difficulties arise in achieving the appropriate throughput. An additional problem is choosing an adhesive system with the required reactivity and sufficiently long open time, as well as a sufficiently short pressing time, with constant process conditions ensured. Adhesives that ensure good bond quality have excessively short open times, leading to difficulties in assembling a set of wooden layer pieces quickly enough, and exceeding the open time results in the failure to achieve a durable adhesive bond. Meanwhile, the use of adhesives distinguished by long open times necessitates an increased pressing time, leading to lower manufacturing process efficiency or an increase in investment outlays for additional gluing stations.

### Background Art

CN102051969A discloses a method for manufacturing multi-layer floor panels, in which the core plastic layer is glued with a solid wood layer, in a cold or hot process, using an adhesive based on epoxy resin. The process of gluing the wood layer to the plastic layer according to the method known in the art involves preparing the layers to be glued by cleaning their surfaces, applying an epoxy adhesive on the core layer to be glued, joining the plastic layer with the solid wood layer, pressing the layers to be joined, and cold pressing within 12 to 30 minutes. In order to reduce the pressing time and simultaneously increase the capacity of the production line, an option for hot pressing at a temperature of 80-100°C is foreseen, which might, however, cause lower binding strength of the adhesive. In subsequent stages of the manufacturing process, the glued layered intermediate product is subjected to further processing, such as grooving, grinding, and painting, to achieve the final product.

Description CN106183132A also discloses a method for manufacturing a multi-layer floor panel with a top layer made of PVC, which is joined with a substrate prepared earlier in the form of a three-layer panel with a core layer made of softwood, such as poplar wood. This three-layer panel is glued using an urea-formaldehyde resin and hot pressed at a temperature of 95°C for a duration of 5 minutes at a pressure of 10-12 kg/cm². The top layer is glued to the substrate in the form of a three-layer panel using a polyurethane adhesive, but 2-3 days of substrate seasoning at a temperature of 22-26°C are required to make the process effective. In addition, given the difficulty of gluing PVC layers to wood, the substrate is ground to an accuracy of ±0.1 mm, and pressing of the top layer with the substrate for a period of 2 to 8 hours is foreseen. An adhesive based on a polyurethane-epoxy blend is also successfully used to glue top layers of floor panels made of PVC to the core based on magnesium chloride and magnesium oxide, stabilised with a fiberglass cloth, as provided in DE102012000468B4.

Also known from EP3235973B1 is a multi-layer panel construction element manufactured by pressing the top layer into the supporting layer. The top layer can also be made separately, subsequently covered with a polyurethane material and glued to the supporting layer. This operation can be completed through pressing at high pressure and high temperature. In the known solution, the top layer is made of a mixture of wood material with a binder, while the core layer is a material based on polyurethane or acrylate. DE 10 2014 105230 relates to a method for manufacturing multilayer panels with a real wood surface that can be used as flooring, and to such multilayer panels.

Known methods do not allow for the gluing of floor panels containing a core composite layer made primarily of mineral raw materials, such as chalk, with wood veneers obtained using a chipless method, employing a binding process implemented on a simple production line. The operation of gluing such panels in a production line method, without negatively impacting the efficiency of the manufacturing process and the quality of the obtained products, is possible only when numerous parallel gluing stations are designed, which, however, require increased investment outlays.

### Summary of Invention

In a method according to the invention, a core composite layer with a thickness of 4-7 mm, made of mineral raw materials in an amount of at least 60% by weight and polymers in an amount of no more than 30% by weight, as well as other auxiliary substances, is glued with a top layer made of solid wood sheets with a thickness ranging from 0.5 to 2.5 mm. According to this method:
- the core composite layer is provided,
- the core composite layer is activated,
- a layer of adhesive is applied to the core composite layer,
- a composition of solid wood sheets intended for the top layer is provided, where each of the sheets is obtained by way of chipless machining and drying, after which,
- the previously prepared composition of solid wood sheets constituting the top layer is applied onto the applied layer of adhesive within an open time shorter than 40 seconds, and
- the multi-layer panel prepared in the described manner is subjected to a two-stage pressing process.

The solution according to the invention is characterized in that:
- in the first stage of pressing, constituting preliminary pressing, the glued layers forming a single multi-layer floor panel are pressed for a time of 5 to 50 seconds until a physical, local joining of the joint layers is achieved, allowing the setting of the position of solid wood sheets constituting the top layer on the core composite layer, after which
- numerous such pressed floor panels are stacked, and then
- the second stage of pressing this stack of preliminary pressed floor panels is implemented, as the main pressing, for a time exceeding 300 seconds, until an adhesive bond of the required durability and strength is obtained, wherein
- the adhesive applied to the core composite layer is a hot-melt reactive polyurethane adhesive.

Preferably, in the first pressing stage, the layers constituting a single multi-layer floor panel are pressed for a time of 5 to 20 seconds.

Preferably, in the first pressing stage, the layers constituting the single multi-layer floor panel are pressed for the time of 8 seconds.

Preferably, PVC is used as the polymer in the core composite layer.

Preferably, chalk is used as the mineral raw material in the core composite layer.

Preferably, the absolute humidity of the solid wood sheets glued to the core composite layer is within 4 to 12%.

Preferably, activation of the core composite layer is achieved through grinding.

Preferably, activation of the core composite layer is achieved through corona treatment.

Preferably, prior to the application of the layer of adhesive, the surface of the core composite layer is exposed to infrared radiation to heat it to a temperature between 20 and 50°C.

Preferably, the amount of the hot-melt polyurethane adhesive applied to the core composite layer is within the range of 35 to 200 g/m².

Preferably, the supplied sheets of solid wood forming the top layer have a thickness in the range of 0.9 to 1.2 mm.

Preferably, a stress-relief layer is applied on the bottom part of the core composite layer.

Preferably, the stress-relief layer takes the form of a varnish layer.

Preferably, the second pressing stage is conducted cold.

### Advantageous Effects of Invention

The use of the two-stage pressing process for the core composite layer, covered with a reactive polyurethane adhesive, with a veneer made of solid wood sheets, wherein in the first stage the position of the layers to be joined is set and secured, allows the appropriate capacity of the production line to be maintained, thus leading to increased efficiency.

The first pressing stage, with anticipated localised delamination, binds sheets of solid wood strongly enough to prevent them from changing position in relation to the core composite layer when the floor panels are moved and stacked. The production method and the materials used allow for higher dimensional stability, adhesive bond resistance to moisture, as well as increased temperature.

The use of solid wood sheets with an absolute humidity in the range of 4 to 12% accelerates the appearance of cohesive forces and leads to the formation of covalent bonds, resulting in an adhesive bond that exhibits the required durability and strength.

Activating the core composite layer by grinding allows for an increase in the contact surface area of the bonded layers.

Activating the core composite layer by corona treatment allows for an increase in surface tension.

Exposing the core composite layer to infrared radiation lengthens the open time of the applied layer of adhesive.

### Brief Description of Drawings

The embodiments of the invention are presented in the drawings, wherein:
Fig. 1 shows a cross-section of a section of the multi-layer floor panel.
Fig. 2 shows a block diagram of the method of producing multilayer floor panels;
Fig. 3 presents a block diagram of an alternative method of producing multi-layer floor panels;
Fig. 4 shows a block diagram of another alternative method of producing multi-layer floor panels;
Fig. 5 shows a perspective view of a single sheet of solid wood obtained using chipless machining, placed on a flat surface;
Fig. 6 shows a perspective view of a part of the sheet of solid wood obtained using chipless machining, glued to the core composite layer, after the first pressing stage;
Fig. 7 presents selected stages of the production method in a schematic view;
Fig. 8 shows a top view of a ready multi-layer floor panel manufactured using the method according to the invention.

### Description of Embodiments

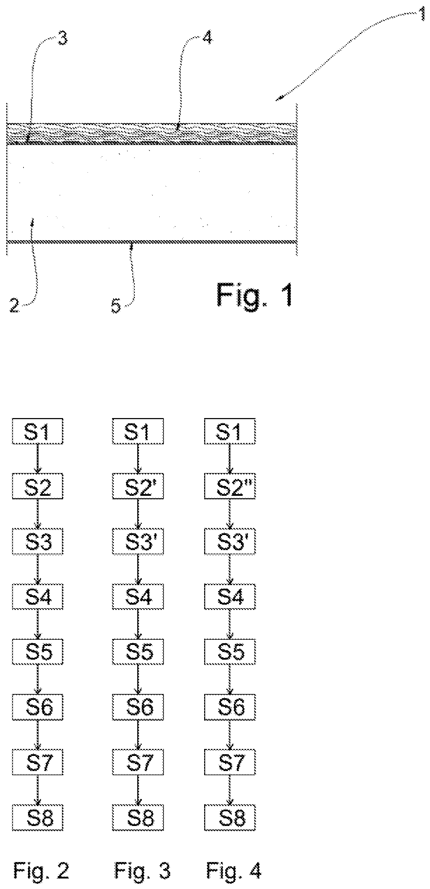

As shown in Fig. 1 the multi-layer floor panel 1 comprises a core composite layer 2, a layer of adhesive 3, a top layer 4 and an optional bottom stress-relief layer 5.

Fig. 2 shows the stages of the production method for multi-layer floor panels 1, including the core composite layer 2 with a density of 1990 kg/m³, the layer of adhesive 3, and the top layer 4. The production method is implemented in a production hall, at a temperature of 24°C and a relative humidity of 55%. The core composite layer 2 is made of 70% chalk by weight, 25% by weight of PVC, and 5% by weight of auxiliary substances, in the form of 4.5% by weight of talcum, 0.3% by weight of stearin, and 0.2% by weight of PE wax, and has a thickness of 6 mm. The used adhesive 3 is a reactive hot-melt polyurethane adhesive, RAPIDEX NP. 2075 LT, with a viscosity of 16,000 mPa·s at a temperature of 150 °C. Meanwhile, the top layer 4 consists of sheets of solid oak wood with a thickness of 1 mm obtained through chipless machining and drying.

According to this production method:
- in the first stage S1, the core composite layer 2 is provided,
- in the second stage S2, the core composite layer 2 is activated by grinding,
- in the third stage S3, the layer of adhesive 3 in the amount of 80 g/m² is applied to the core composite layer 2,
- in the fourth stage S4, the material for forming the top layer 4 is provided, in the form of rectangular oak veneers with a relative humidity of 10%,
- in the fifth stage S5, the composition of solid wood sheets prepared in the previous stage S4 is laid on the layer of adhesive 3 applied in stage S3, within an open time of 15 to 40 seconds, as the top layer 4,
- in the sixth stage S6, the multi-layer panel prepared in the stage S5 is subjected to the first pressing stage, being preliminary pressing, for 15 seconds, at a pressure of 1 N/mm²,
- in the seventh stage S7, a stack of 75 pieces of panels that had been subjected to preliminary pressing in the stage S6 is formed, and subsequently,
- in the eighth stage S8, the second stage of cold pressing, being main pressing, is performed for a time of 375 seconds, at a pressure of 1.5 N/mm².

In another embodiment of the production method for multilayer floor panels 1, illustrated schematically in Fig. 3, the core composite layer 2 with a thickness of 7 mm and a density of 1910 kg/m³ is made of 63% by weight of chalk, 16% by weight of PVC, and 21% by weight of auxiliary substances, including 20.5% by weight of talcum, 0.3% by weight of stearin, and 0.2% by weight of PE wax. The adhesive 3 used is KLEIBERIT 711.9.06 LT, with a viscosity of 20,000 mPa·s at a temperature of 160°C, while the top layer 4 consists of sheets of solid ash wood, each with a thickness of 0.8 mm, obtained through chipless machining and drying. The production method is implemented in a production hall, at a temperature of 25°C and a relative humidity of 50%.

According to this production method:
- in the first stage S1, the core composite layer 2 is provided,
- in the second stage S2', the core composite layer 2 is activated through grinding and corona treatment, where the grinding is implemented first and the ground surface is subsequently subjected to corona treatment in order to increase the surface tension,
- in the third stage S3', the surface of the core composite layer 2 is heated with infrared radiation to a temperature of 35°C, and then the layer of adhesive 3 in the amount of 70 g/m² is applied to the core composite layer 2,
- in the fourth stage S4, material to form the top layer 4 is provided in the form of a composition of rectangular sheets of solid ash wood with an absolute humidity of 12%,
- in the fifth stage S5, the composition of solid wood sheets, prepared in the previous stage S4, is placed on the layer of adhesive 3 applied in the stage S3', within an open time of 25 to 30 seconds, as the top layer 4,
- in the sixth stage S6, the multi-layer panel prepared in the stage S5 is subjected to the first pressing stage, being preliminary pressing, for 12 seconds, at a pressure of 0.9 N/mm²,
- in the seventh stage S7, a stack of 100 pieces of panels subjected to preliminary pressing in the stage S6 is formed, and subsequently,
- in the eighth stage S8, the second stage of pressing, being the main pressing, is performed for a time of 480 seconds, at a pressure of 1.5 N/mm².

Fig. 4 shows another embodiment of the production method for multi-layer floor panels 1, comprising the core composite layer 2 with a density of 2030 kg/m³, the layer of adhesive 3, the top layer 4, and the bottom stress-relief layer 5 with a thickness of 0.2 mm. The core composite layer 2 is made of 72% by weight of chalk, 23% by weight of PVC, and 5% by weight of auxiliary substances, consisting of 4.5% by weight of talcum, 0.3% by weight of stearin, and 0.2% by weight of PE wax, and has a thickness of 5 mm. The adhesive 3 used is the chemically activated hot-melt KLEIBERIT 706.1.50 LT, with a viscosity of 20,000 mPa·s at a temperature of 160°C. Meanwhile the top layer 4 consists of oak veneer, with a thickness of 1.2 mm, obtained through chipless machining and drying, while the bottom stress-relief layer 5 is applied to the bottom part of the core composite layer 2 as a UV cured varnish. The production method is implemented in a production hall at a temperature of 23°C and a relative humidity of 45%.

According to this production method:
- in the first stage S1, the core composite layer 2 is provided, with the bottom stress-relief layer 5 applied,
- in the second stage S2", the layer is subjected to corona treatment to increase surface tension,
- in the third stage S3', the surface of the core composite layer 2 is heated with infrared radiation at a power of 24 kW to a temperature of 25°C, and then a layer of adhesive 3 in the amount of 100 g/m² is applied to the core composite layer 2,
- in the fourth stage S4, material to form the top layer 4 is provided in the form of a composition of rectangular sheets of solid oak wood with an absolute humidity of 12%,
- in the fifth stage S5, the composition of solid wood sheets, prepared in the previous stage S4, is placed on the layer of adhesive 3 applied at the stage S3', within an open time of 25 to 30 seconds, as the top layer 4,
- in the sixth stage S6, the multi-layer panel prepared in the stage S5 is subjected to the first pressing stage, being preliminary pressing, for 8 seconds, at a pressure of 1.2 N/mm²,
- in the seventh stage S7, a stack of 120 pieces of panels subjected to preliminary pressing in the stage S6 is formed, and subsequently,
- in the eighth stage S8, the second stage of pressing, being the main pressing, is performed for a time of 520 seconds, at a pressure of 1.7 N/mm².

A physical, local joining of the layers to be joined during preliminary pressing is obtained within a time of 5 to 50 seconds, with a pressure used within a range of 0.9 to 1.2 N/mm². It is also possible to use longer preliminary pressing times and higher pressures, but in the method according to the invention increasing the time or pressure above the indicated upper limits is not necessary to ensure clear positioning of the top layer 4 on the core composite layer 2.

The second stage of pressing, constituting the main pressing, does not require special conditions related to air humidity or ambient temperature. This pressing stage is conducted cold, at the temperature of the production hall without additional heating. The required hardness and strength of the layer of adhesive 3, in the embodiments presented in Fig. 2, Fig. 3, and Fig. 4, is obtained within 300 to 600 seconds, at an applied pressure of between 1.5 and 1.7 N/mm². It is also possible to use longer main pressing times and higher pressures, but in the method according to the invention, increasing the time or pressure above the indicated upper limits does not significantly increase the strength of the adhesive bond.

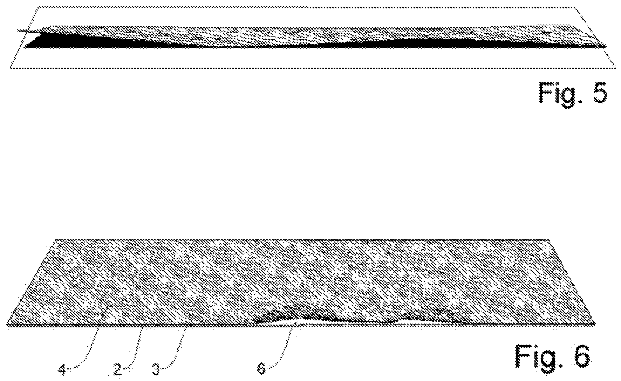

As shown in Fig. 5, a single sheet of solid wood made using chipless machining is not flat. The wavy surface of the sheet is primarily a result of the production and drying technologies used.

In the stage six S6, as illustrated in the block diagrams from Fig. 2 to Fig. 4 of the embodiments of the production method for multi-layer floor panels 1, preliminary pressing is conducted. The objective of preliminary pressing conducted in the stage S6 is to definitively position the top layer 4 on the core composite layer 2.

Fig. 6 shows the localised joining of the top layer 4 and the core composite layer 2 using the layer of adhesive 3 after the preliminary pressing stage. After this stage, delamination of the layers to be joined in the form of localised delamination 6 occurs at the locations of waviness of sheet surfaces forming the top layer 4. However, the layer of pressed adhesive 3, formed, in places of contact with the layers to be joined, sufficient adhesion forces to ensure a stable position of the top layer 4 in relation to the core composite layer 2 and to maintain this stabilised position during the transport of preliminarily pressed panels to the stacking stage.

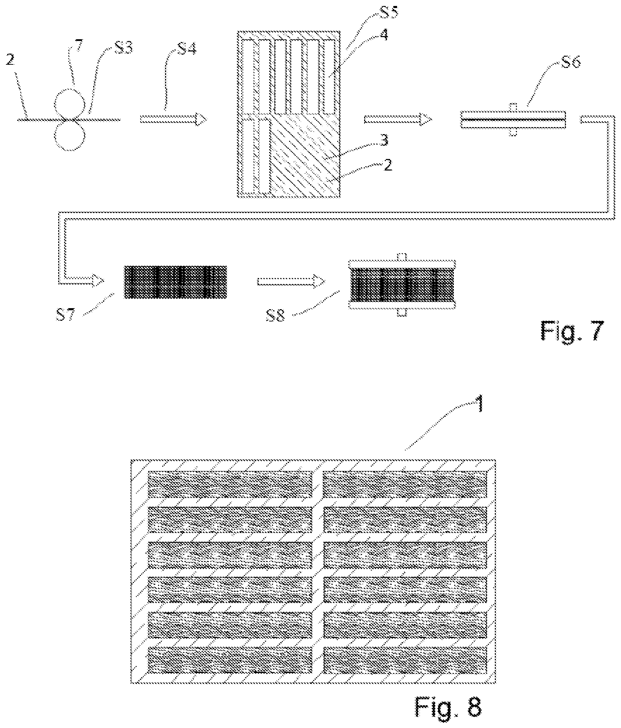

A schematic view of the selected stages of the production method for multi-layer floor panels is shown in Fig. 7. In the third stage S3, a roller dispenser 7 is used to provide uniform application of the layer of adhesive 3 on the core composite layer 2. In the fourth stage S4, the material necessary to form the top layer 4 is provided, while in the next stage S5, the composition of sheets of solid wood is laid on the core composite layer 2 covered with the layer of adhesive 3. In the sixth stage S6, a single multi-layer floor panel prepared in the previous stage is subjected to the preliminary pressing process, after which, in the seventh stage S7, several dozen or several hundred panels subjected to preliminary pressing are stacked, and in the eighth stage S8, the such prepared stack is subjected to main pressing.

Fig. 8 shows a multi-layer floor panel 1 with dimensions of 1165 x 2235 mm, made using the method according to the invention, with the top layer 4 composed of 12 rectangular sheets of solid oak wood attached using an adhesive to the core composite layer in the two-stage pressing process.

Multi-layer floor panels 1, manufactured using the method according to the invention, are characterized by the waterproof nature of the adhesive layer, confirmed by ANSI HPVA EF 2020 tests, and a peel-off strength of the top layer 4 of at least 1.5 N/mm² measured according to EN 311 in the direction perpendicular to the surface.

## Claims

1. A method of producing multi-layer floor panels (1), in which a core composite layer (2) with a thickness of 4 to 7 mm, made of mineral raw materials in an amount of at least 60% by weight and polymers in an amount of no more than 30% by weight, as well as other auxiliary substances, is glued with a top layer (4) made of solid wood sheets with a thickness ranging from 0.5 to 2.5 mm, wherein
the core composite layer (2) is provided,
the core composite layer (2) is activated,
a layer of adhesive (3) is applied to the core composite layer (2),
a composition of sheets of solid wood is provided, intended for the top layer (4), in which each of the sheets is obtained using chipless machining and drying,
thereafter, onto the applied layer of adhesive, during an open time shorter than 40 s, the composition of sheets of solid wood prepared earlier is placed, constituting the top layer (4), and
the multi-layer floor panel prepared in such a manner is subjected to two-stage pressing,
**characterised in that**
- in the first pressing stage, constituting preliminary pressing, glued layers forming the single multi-layer floor panel (1) are pressed for a time between 5 and 50 seconds, until a physical, local joining of the layers is obtained, with localised delamination (6), allowing determination of the position of the sheets of solid wood constituting the top layer (4) being placed on the core composite layer (2), and then
- numerous floor panels (1) such pressed are stacked, after which
- the second stage of pressing of the said stack of preliminarily pressed floor panels (1) is conducted, constituting main pressing, for a period no longer than 300 seconds, until an adhesive bond of the required resilience and strength is obtained, wherein
- as the adhesive (3) applied to the core composite layer (2) a reactive hot-melt polyurethane adhesive is used.

2. The method of claim 1, **characterised in that** in the first stage of pressing, the glued layers forming the single multilayer floor panel (1) are pressed for 5 to 20 seconds.

3. The method of claim 2, **characterised in that** in the first stage of pressing, the glued layers forming the single multilayer floor panel (1) are pressed for 8 seconds.

4. The method of claims 1 to 3, **characterised in that** PVC is used as the polymer in the core composite layer (2).

5. The method of claims 1 to 4, **characterised in that** chalk is used as the raw material in the core composite layer (2).

6. The method of claims 1 to 5, **characterised in that** the absolute humidity of solid wood sheets glued to the core composite layer (2) is in the range of 4 to 12%.

7. The method of claims 1 to 6, **characterised in that** the activation of the core composite layer (2) is conducted by way of grinding.

8. The method of claims 1 to 6, **characterised in that** the activation of the core composite layer (2) is conducted by way of corona treatment.

9. The method of claims 1 to 8, **characterised in that** prior to the application of the layer of adhesive (3), the core composite layer is exposed to infrared radiation.

10. The method of claims 1 to 9, **characterised in that** the amount of polyurethane adhesive applied to the core composite layer (2) is between 35 and 200 g/m².

11. The method of claims 1 to 10, **characterised in that** the solid wood sheets provided forming the top layer (4) have a thickness ranging from 0.9 to 1.2 mm.

12. The method of claims 1 to 11, **characterised in that** a stress-relief layer (5) is applied to the lower part of the core composite layer (2).

13. The method of claim 12, **characterised in that** the stress-relief layer (5) has the form of a varnish layer.

14. The method of claims 1 to 13, **characterised in that** the second pressing stage is conducted cold.

## Patentansprüche

1. Verfahren zur Herstellung von mehrschichtigen Bodenplatten (1), wobei eine aus mineralischen Rohstoffen in einer Menge von mindestens 60 Gew.-% und Polymeren in einer Menge von höchstens 30 Gew.-% sowie weiteren Hilfsstoffen hergestellte Kernverbundschicht (2) mit einer Dicke von 4 bis 7 mm mit einer Deckschicht (4) aus Massivholzplatten mit einer Dicke im Bereich von 0,5 bis 2,5 mm verklebt wird, bei dem:
die Kernverbundschicht (2) bereitgestellt wird,
die Kernverbundschicht (2) aktiviert wird,
eine Klebeschicht (3) auf die Kernverbundschicht (2) aufgebracht wird,
eine Zusammensetzung aus Massivholzplatten bereitgestellt wird, die für die Deckschicht (4) bestimmt ist, wobei jede der Platten durch spanlose Bearbeitung und Trocknung erhalten ist,
anschließend die zuvor hergestellte Anordnung aus Massivholzplatten, die die Deckschicht (4) bildet, innerhalb einer Offenzeit von weniger als 40 s auf die aufgetragene Klebeschicht aufgebracht wird und
die auf diese Weise hergestellte mehrschichtige Bodenplatte einer zweistufigen Pressung unterzogen wird,
**dadurch gekennzeichnet, dass**
- in der ersten Pressstufe, die eine Vorpressung darstellt, die die einzelne mehrschichtige Bodenplatte (1) bildenden, verklebten Schichten für eine Zeit zwischen 5 und 50 Sekunden gepresst werden, bis eine physikalische, lokale Verbindung der Schichten mit lokalisierter Delaminierung (6) erreicht ist, die die Bestimmung der Position der die Deckschicht (4) bildenden Massivholzplatten ermöglicht, die auf die Kernverbundschicht (2) aufgelegt werden, und anschließend
- zahlreiche auf diese Weise gepresste Bodenplatten (1) gestapelt werden, woraufhin
- die zweite Pressstufe des genannten Stapels vorgepresster Bodenplatten (1) über einen Zeitraum von höchstens 300 Sekunden durchgeführt wird, die das Hauptpressen darstellt, bis eine Klebeverbindung mit der erforderlichen Elastizität und Festigkeit erreicht ist, wobei
- als Klebstoff (3) ein reaktiver Heißschmelz-PolyurethanKlebstoff verwendet wird, der auf die Kernverbundschicht (2) aufgetragen wird.

2. Verfahren nach Anspruch 1, **dadurch gekennzeichnet, dass** die die einzelne mehrschichtige Bodenplatte (1) bildenden geklebten Schichten in der ersten Pressstufe 5 bis 20 Sekunden lang gepresst werden.

3. Verfahren nach Anspruch 2, **dadurch gekennzeichnet, dass** die die einzelne mehrschichtige Bodenplatte (1) bildenden geklebten Schichten in der ersten Pressstufe in der ersten Pressstufe 8 Sekunden lang gepresst werden.

4. Verfahren nach Ansprüchen 1 bis 3, **dadurch gekennzeichnet, dass** PVC als Polymer in der Kernverbundschicht (2) verwendet wird.

5. Verfahren nach Ansprüchen 1 bis 4, **dadurch gekennzeichnet, dass** in der Kernverbundschicht (2) Kreide als Rohstoff verwendet wird.

6. Verfahren nach Ansprüchen 1 bis 5, **dadurch gekennzeichnet, dass** die absolute Feuchtigkeit der auf die Kernverbundschicht (2) geklebten Massivholzplatten im Bereich von 4 bis 12 % liegt.

7. Verfahren nach Ansprüchen 1 bis 6, **dadurch gekennzeichnet, dass** die Aktivierung der Kernverbundschicht (2) durch Schleifen erfolgt.

8. Verfahren nach Ansprüchen 1 bis 6, **dadurch gekennzeichnet, dass** die Aktivierung der Kernverbundschicht (2) mittels Koronabehandlung erfolgt.

9. Verfahren nach Ansprüchen 1 bis 8, **dadurch gekennzeichnet, dass** die Kernverbundschicht vor dem Aufbringen der Klebeschicht (3) einer Infrarotstrahlung ausgesetzt wird.

10. Verfahren nach Ansprüchen 1 bis 9, **dadurch gekennzeichnet, dass** die auf die Kernverbundschicht (2) aufgetragene Menge an Polyurethanklebstoff zwischen 35 und 200 g/m² liegt.

11. Verfahren nach Ansprüchen 1 bis 10, **dadurch gekennzeichnet, dass** die als Deckschicht (4) dienenden Massivholzplatten eine Dicke im Bereich von 0,9 bis 1,2 mm aufweisen.

12. Verfahren nach Ansprüchen 1 bis 11, **dadurch gekennzeichnet, dass** auf den unteren Teil der Kernverbundschicht (2) eine Spannungsentlastungsschicht (5) aufgebracht wird.

13. Verfahren nach Anspruch 12, **dadurch gekennzeichnet, dass** die Spannungsentlastungsschicht (5) die Form einer Lackschicht aufweist.

14. Verfahren nach Ansprüchen 1 bis 13, **dadurch gekennzeichnet, dass** die zweite Pressstufe kalt durchgeführt wird.

## Revendications

1. Procédé de fabrication de panneaux de plancher multicouches (1), dans lequel une couche composite centrale (2) d'une épaisseur de 4 à 7 mm, faite de matières premières minérales à raison d'au moins 60 % en masse et de polymères à raison de pas plus de 30 % en masse, ainsi que d'autres substances auxiliaires, est collée à une couche supérieure (4) faite de feuilles de bois massif d'une épaisseur se situant dans la plage de 0,5 à 2,5 mm, dans lequel
la couche composite centrale (2) est fournie,
la couche composite centrale (2) est activée,
une couche d'adhésif (3) est appliquée sur la couche composite centrale (2),
une composition de feuilles de bois massif est fournie, destinée à la couche supérieure (4), chacune des feuilles étant obtenue par usinage sans copeaux et séchage,
ensuite, sur la couche d'adhésif appliquée, pendant un temps ouvert inférieur à 40 s, la composition de feuilles de bois massif préparée au préalable est placée, constituant la couche supérieure (4), et
le panneau de plancher multicouches préparé de cette manière est soumis à un pressage en deux étapes,
**caractérisé par le fait que**
- dans la première étape de pressage, constituant un pressage préliminaire, des couches collées formant le panneau de plancher multicouches individuel (1) sont pressées pendant une durée entre 5 et 50 secondes, jusqu'à ce qu'un raccordement physique local des couches soit obtenu, avec un délaminage localisé (6), permettant de déterminer la position des feuilles de bois massif constituant la couche supérieure (4) qui est placée sur la couche composite centrale (2), puis
- de nombreux panneaux de plancher (1) ainsi pressés sont empilés, après quoi
- la seconde étape de pressage dudit empilement de panneaux de plancher (1) pressés de façon préliminaire est conduite, constituant un pressage principal, pendant une durée n'excédant pas 300 secondes, jusqu'à ce qu'une liaison adhésive des durabilité et résistance requises soit obtenue, dans lequel
- comme adhésif (3) appliqué à la couche composite centrale (2), un adhésif de polyuréthane thermofusible réactif est utilisé.

2. Procédé selon la revendication 1, **caractérisé par le fait que**, dans la première étape de pressage, les couches collées formant le panneau de plancher multicouches individuel (1) sont pressées pendant 5 à 20 secondes.

3. Procédé selon la revendication 2, **caractérisé par le fait que**, dans la première étape de pressage, les couches collées formant le panneau de plancher multicouches individuel (1) sont pressées pendant 8 secondes.

4. Procédé selon les revendications 1 à 3, **caractérisé par le fait que** du PVC est utilisé comme polymère dans la couche composite centrale (2).

5. Procédé selon les revendications 1 à 4, **caractérisé par le fait que** de la craie est utilisée comme matière première dans la couche composite centrale (2).

6. Procédé selon les revendications 1 à 5, **caractérisé par le fait que** l'humidité absolue des feuilles de bois massif collées sur la couche composite centrale (2) se situe dans la plage de 4 à 12 %.

7. Procédé selon les revendications 1 à 6, **caractérisé par le fait que** l'activation de la couche composite centrale (2) est conduite par meulage.

8. Procédé selon les revendications 1 à 6, **caractérisé par le fait que** l'activation de la couche composite centrale (2) est conduite par traitement corona.

9. Procédé selon les revendications 1 à 8, **caractérisé par le fait qu'**avant l'application de la couche d'adhésif (3), la couche composite centrale est exposée à un rayonnement infrarouge.

10. Procédé selon les revendications 1 à 9, **caractérisé par le fait que** la quantité d'adhésif de polyuréthane appliquée à la couche composite centrale (2) est entre 35 et 200 g/m².

11. Procédé selon les revendications 1 à 10, **caractérisé par le fait que** les feuilles de bois massif fournies formant la couche supérieure (4) ont une épaisseur dans la plage de 0,9 à 1,2 mm.

12. Procédé selon les revendications 1 à 11, **caractérisé par le fait qu'**une couche de relaxation des contraintes (5) est appliquée à la partie inférieure de la couche composite centrale (2).

13. Procédé selon la revendication 12, **caractérisé par le fait que** la couche de relaxation des contraintes (5) se présente sous la forme d'une couche de vernis.

14. Procédé selon les revendications 1 à 13, **caractérisé par le fait que** la seconde étape de pressage est conduite à froid.
